(19) Europäisches Patentamt
European Patent Office
Office européen des brevets

(11) EP 2 982 710 A1

(12) EUROPEAN PATENT APPLICATION
published in accordance with Art. 153(4) EPC

(43) Date of publication:
10.02.2016 Bulletin 2016/06

(21) Application number: 14778572.9

(22) Date of filing: 03.04.2014

(51) Int Cl.:
*C08L 23/20* (2006.01) *C08K 5/05* (2006.01)
*C08K 5/101* (2006.01)

(86) International application number:
PCT/JP2014/059885

(87) International publication number:
WO 2014/163160 (09.10.2014 Gazette 2014/41)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME

(30) Priority: 03.04.2013 JP 2013077454

(71) Applicant: Mitsui Chemicals, Inc.
Tokyo 105-7117 (JP)

(72) Inventor: TOKUI, Shin
Ichihara-shi
Chiba 299-0108 (JP)

(74) Representative: Hoffmann Eitle
Patent- und Rechtsanwälte PartmbB
Arabellastraße 30
81925 München (DE)

# (54) POLY-1-BUTENE RESIN COMPOSITION

(57) A poly-1-butene resin composition suitable for use in a water or hot water supply pipe; a water or hot water supply pipe which is produced from the poly-1-butene resin composition and which is superior in stress crack resistance in chlorine-containing aqueous environment; and a double-pipe structure which is composed of the pipe and which is superior in stress crack resistance in chlorine-containing aqueous environment, are provided. The poly-1-butene resin composition includes a specific benzoate-based additive (A) and a specific phenol-based additive (B) being at least one selected from a phenol-based additive (B1), a phenol-based additive (B2) and a phenol-based additive (B3), wherein contents of (B1), (B2) and (B3) are each from 0.2 to 1.0 part by weight with respect to 100 parts by weight of the poly-1-butene resin; and a weight ratio of (A) to (B) is (A): (B) = 1:1.5 to 1:5.



Printed by Jouve, 75001 PARIS (FR)

## Description

### Technical Field

The present invention relates to a poly-1-butene resin composition suitable for use in a water or hot water supply pipe, a water or hot water supply pipe comprising the poly-1-butene resin composition, and a double-pipe structure comprising the pipe.

### Background Art

Conventionally, a poly-1-butene resin pipe has been used as a water or hot water supply pipe. To suppress chlorine contained in tap water for sterilization from chemically damaging the poly-1-butene resin, poly-1-butene resin compositions obtained by adding specific amount of various kinds of additives to the poly-1-butene resin have been proposed for pipes (for example, Patent Literatures 1 to 4).

Meanwhile, in order to protect outer surfaces of a water or hot water supply pipe, a pipe equipped with a protecting tube or a sheath tube is conventionally used in some cases.

For instance, a piping method generally called sheath piping method is known, in which a sheath tube is laid under a slab or a floor during the construction of the skeleton of a building, and thereafter a water or hot water supply pipe is inserted at an appropriate time (e.g., during interior finish work) within the sheath tube already laid. This sheath piping method is a construction method used often, particularly because of the advantages of protecting outer surfaces of the water or hot water supply pipe as well as facilitating renewing the water or hot water supply pipe.

In the sheath piping method, along a curving part of the sheath tube previously installed, a water or hot water supply pipe, undergoing bending stress and accordingly deformed, is inserted. The poly-1-butene resin pipe, which has flexibility, is therefore suitable in the sheath piping method.

Yet, it has been found that even when a conventional pipe formed from a poly-1-butene resin composition with improved resistance to chlorine-containing water is used, after the completion of the piping work, cracking presumably due to the deterioration caused by chlorine-containing water occurs in bent portions of the poly-1-butene resin pipe that are formed along considerably curving parts formed as a result of, e.g., the deformation of the sheath tube.

### Citation List

[Patent Literature]

[Patent Literature 1] JP-A-S58-084839
[Patent Literature 2] JP-A-S63-213542
[Patent Literature 3] JP-A-S63-213543
[Patent Literature 4] JP-A-S63-213544

### Summary of the Invention

### Technical Problem

It is an object of the present invention to provide a poly-1-butene resin composition suitable for use in a water or hot water supply pipe. More specifically, it is an object of the present invention to provide a poly-1-butene resin composition capable of producing a pipe superior in stress crack resistance in chlorine-containing aqueous environment as compared with conventional poly-1-butene resin pipes. Also provided are a water or hot water supply pipe which is produced from the poly-1-butene resin composition and which is superior in stress crack resistance in chlorine-containing aqueous environment; and a double-pipe structure which is composed of the pipe and which is superior in stress crack resistance in chlorine-containing aqueous environment.

### Solution to Problem

To solve the above problem, the present inventors have made extensive studies, and have found that by a poly-1-butene resin composition containing specific additives at a specific ratio, the resultant water or hot water supply pipe comprising the poly-1-butene resin composition has improved stress crack resistance in chlorine-containing aqueous environment, thereby perfecting the present invention.

The present invention is summarized in the following manner.

[1] A poly-1-butene resin composition comprising a poly-1-butene resin, a benzoate-based additive (A) represented by Formula (a) and a phenol-based additive (B), the phenol-based additive (B) being at least one phenol-based additive selected from a phenol-based additive (B1) represented by Formula (b1), a phenol-based additive (B2) represented by Formula (b2) and a phenol-based additive (B3) represented by Formula (b3), wherein the phenol-based additive (B1), if present, accounts for 0.2 to 1.0 part by weight with respect to 100 parts by weight of the poly-1-butene resin; the phenol-based additive (B2), if present, accounts for 0.2 to 1.0 part by weight with respect to 100 parts by weight of the poly-1-butene resin; and the phenol-based additive (B3), if present, accounts for 0.2 to 1.0 part by weight with respect to 100 parts by weight of the poly-1-butene resin, and wherein in the poly-1-butene resin composition, a weight ratio of the benzoate-based additive (A) to the phenol-based additive (B) is the benzoate-based additive (A): the phenol-based additive (B) = 1:1.5 to 1:5,

[Chem. 1]

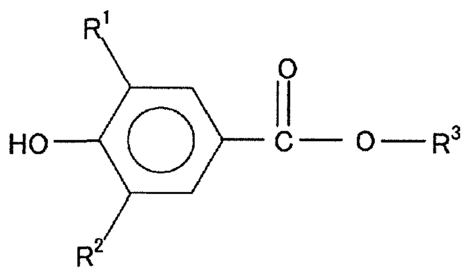

· · · · · (a)

wherein in Formula (a), $R^1$ and $R^2$ are each independently an alkyl group having 1 to 4 carbon atoms; $R^3$ is an alkyl group having 1 to 18 carbon atoms or an aryl group having 6 to 18 carbon atoms, and the aryl group may be substituted with an alkyl group,

[Chem. 2]

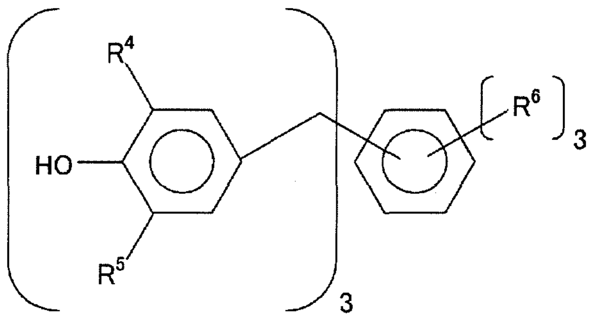

· · · · · (b 1)

wherein in Formula (b1), $R^4$, $R^5$ and $R^6$ are each independently an alkyl group having 1 to 4 carbon atoms,

[Chem. 3]

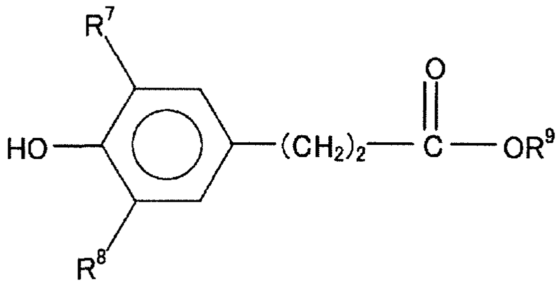

..... (b 2)

wherein in Formula (b2), $R^7$ and $R^8$ are each independently an alkyl group having 1 to 4 carbon atoms; and $R^9$ is an alkyl group having 10 to 20 carbon atoms,

[Chem. 4]

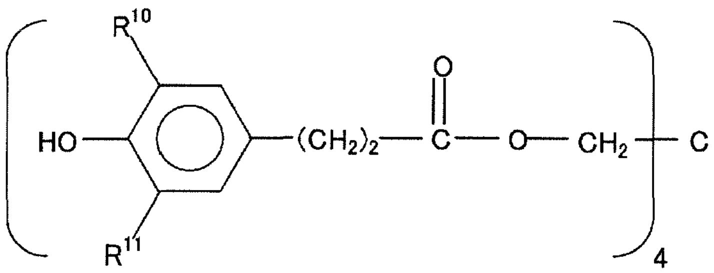

..... (b 3)

[0018]

wherein in Formula (b3), $R^{10}$ and $R^{11}$ are each independently an alkyl group having 1 to 4 carbon atoms.
[2] The poly-1-butene resin composition, wherein the phenol-based additive (B) comprises the phenol-based additive (B1), the phenol-based additive (B2) and the phenol-based additive (B3) each in an amount of 0.2 to 1.0 part by weight with respect to 100 parts by weight of the poly-1-butene resin; and a weight ratio of the benzoate-based additive (A) to the phenol-based additive (B) is the benzoate-based additive (A): the phenol-based additive (B) = 1:1.5 to 1:5.
[3] The poly-1-butene resin composition, wherein $R^3$ in Formula (a) is represented by the following formula wherein $R^{12}$ is an alkyl group having 1 to 4 carbon atoms.

[Chem. 5]

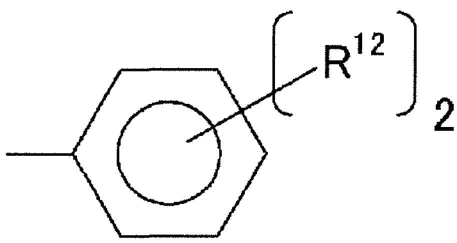

[4] The poly-1-butene resin composition, wherein the benzoate-based compound (A) is 2,4-di-t-butylphenyl-3,5-di-t-butyl-4-hydroxybenzoate.
[5] The poly-1-butene resin composition, wherein the phenol-based additive (B1) is 1,3,5-trimethyl-2,4,6-tris(3,5-di-t-butyl-4-hydroxybenzyl)benzene; the phenol-based additive (B2) is octadecyl-3-(3,5-di-t-butyl-4-hydroxyphenyl)propionate; and the phenol-based additive (B3) is tetrakis[methylene-3-(3,5-di-t-butyl-4-hydroxyphenyl)propionate]methane.

[6] The poly-1-butene resin composition, wherein the phenol-based additive (B1), the phenol-based additive (B2) and the phenol-based additive (B3) total 0.8 to 1.0 part by weight with respect to 100 parts by weight of the poly-1-butene resin.

[7] The poly-1-butene resin composition, which comprises a sulfur-based stabilizer and/or a phosphorus-based stabilizer at 0.01 to 1.0 part by weight with respect to 100 parts by weight of the poly-1-butene resin.

[8] A water or hot water supply pipe comprising the poly-1-butene resin composition.

[9] The water or hot water supply pipe, which has a bent portion.

[10] The water or hot water supply pipe, which has a bent portion and which has a bend radius (minimum bend radius) not more than 50 times as large as an outer diameter of the pipe.

[11] A water or hot water supply pipe having a double-pipe structure for water or hot water supply, wherein the water or hot water supply pipe is inserted in a protecting tube or a sheath tube that is flexible and made of a synthetic resin.

[12] A hot water supply system using the water or hot water supply pipe according to any one of [8] to [11].

[13] A radiator using the water or hot water supply pipe according to any one of [8] to [11].

[14] A heat exchange system using the water or hot water supply pipe according to any one of [8] to [11].

[15] A floor heating system using the water or hot water supply pipe according to any one of [8] to [11].

Effects of the Invention

By using the poly-1-butene resin composition of the present invention for a water or hot water supply pipe, the portion of the pipe to which stress is loaded (for example, a bent portion of the pipe) is suppressed from having cracks attributable to chlorine-containing water.

Description of Embodiments

The present invention will now be described in detail, but descriptions of structural components set forth hereinafter are representative ones of working embodiments of the present invention, not serving as limiting the present invention.

[Poly-1-butene resin]

The poly-1-butene resin used in the present invention is a 1-butene homopolymer or 1-butene ·$\alpha$-olefin copolymer, which is obtained by (co)polymerizing 1-butene in an amount of 80 to 100 mol%, preferably 90 to 100 mol%, and an $\alpha$-olefin other than 1-butene in an amount of 0 to 20 mol%, preferably 0 to 10 mol%, wherein 1-butene and the $\alpha$-olefin total 100 mol%.

Examples of the $\alpha$-olefin other than 1-butene are $\alpha$-olefins having 2 to 10 carbon atoms: specifically, for example, ethylene, propylene, 1-pentene, 4-methyl-1-pentene, 1-hexene, 1-heptene, 1-octene, 1-nonene and 1-decene. These $\alpha$-olefins may be used singly, or may be combined and used.

The poly-1-butene resin used in the present invention has a melt flow rate (MFR; ASTMD 1238, 190°C, 2.16 kg load) which is preferably 0.01 to 50 g/10 min, and more preferably 0.01 to 30 g/10 min.

The poly-1-butene resin has a molecular weight distribution (Mw/Mn) as measured by GPC which is 3 or more, particularly preferably 3 to 30, and still more preferably 6 to 30. The poly-1-butene resin has an isotactic index as determined by NMR (mmmm%) which is 90 or more, and particularly preferably 93 or more.

The poly-1-butene resin having a melt flow rate in the above-described range is preferred in terms of having flexibility and being excellent in properties including creep resistance, impact resistance, wear resistance, chemical resistance and stress cracking resistance.

The poly-1-butene resin as described above can be prepared by a method conventionally known: for example, by polymerizing 1-butene alone or by copolymerizing 1-butene with the $\alpha$-olefin other than 1-butene, in the presence of a Ziegler-Natta catalyst or a metallocene catalyst. Such poly-1-butene production method as described above is indicated, for example, in WO 02/02659.

A commercially-available poly-1-butene product, such as BEAULON, produced by Mitsui Chemicals, Inc., may be used.

[Benzoate-based additive (A)]

The benzoate-based additive (A) used in the present invention is represented by Formula (a).

[Chem. 1]

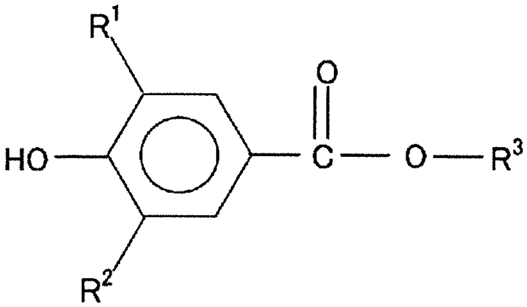

. . . . . (a)

In Formula (a), $R^1$ and $R^2$ are each independently an alkyl group having 1 to 4 carbon atoms; and $R^3$ is an alkyl group having 1 to 18 carbon atoms or an aryl group having 6 to 18 carbon atoms, and the aryl group may be substituted with an alkyl group.

Specific examples of the alkyl group having 1 to 4 carbon atoms as $R^1$ and $R^2$ in Formula (a) include methyl group, ethyl group, n-propyl group, isopropyl group, n-butyl group, isobutyl group, s-butyl group and t-butyl group.

Specific examples of the alkyl group having 1 to 18 carbon atoms as $R^3$ in Formula (a) include methyl group, ethyl group, n-propyl group, isopropyl group, n-butyl group, isobutyl group, s-butyl group, t-butyl group, n-pentyl group, isopentyl group, neopentyl group, n-hexyl group, isohexyl group, heptyl group, octyl group, nonyl group, decyl group, undecyl group, dodecyl group, tridecyl group, tetradecyl group, pentadecyl group, hexadecyl group, heptadecyl group and octadecyl group.

Specific examples of the aryl group having 6 to 18 carbon atoms as $R^3$ in Formula (a) include phenyl group and naphthyl group. $R^3$ in Formula (a) may be an aryl group substituted with one to three alkyl groups, specific examples including tolyl group, cumenyl group and mesityl group as well as a functional group represented by the following formula. $R^{12}$ in the following formula is an alkyl group having 1 to 4 carbon atoms. Specific examples of the alkyl group having 1 to 4 carbon atoms as $R^{12}$ include methyl group, ethyl group, n-propyl group, isopropyl group, n-butyl group, isobutyl group, s-butyl group and t-butyl group.

[Chem. 5]

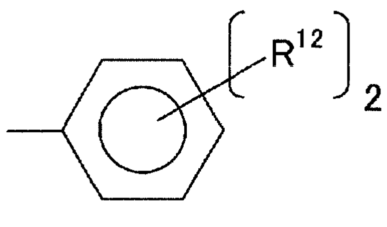

Specifically preferred as the benzoate-based additive (A) described above are 2,4-di-t-butylphenyl-3,5-di-t-butyl-4-hydroxybenzoate and hexadecyl-3,5-di-t-butyl-4-hydroxybenzoate.

The benzoate-based additive (A) described above may be used singly, or may be a combination of two or more kinds.

In the poly-1-butene resin composition of the present invention, the content of the benzoate-based additive (A), in its weight ratio to the phenol-based additive (B), set forth later, is such that the benzoate-based additive (A): the phenol-based additive (B) = 1:1.5 to 1:5, and preferably 1:2 to 1:4.

In the poly-1-butene resin composition of the present invention, the content of the benzoate-based additive (A) is not particularly limited as long as satisfying its weight ratio to the phenol-based additive (B), set forth later, being such that the benzoate-based additive (A): the phenol-based additive (B)=1:1.5 to 1:5. Yet, the content of benzoate-based additive (A) is preferably 0.2 to 0.5 part by weight, more preferably 0.25 to 0.4 part by weight, and particularly preferably 0.25 to 0.35 part by weight, with respect to 100 parts by weight of the poly-1-butene resin.

Using the benzoate-based additive (A) along with the phenol-based additive (B), set forth later, in the above-described range, results in obtaining a poly-1-butene resin composition capable of producing a pipe superior in stress crack resistance in chlorine-containing aqueous environment.

[Phenol-based additive (B)]

The phenol-based additive (B) used in the present invention is composed of the phenol-based additive (B1) represented by Formula (b1) set forth later, the phenol-based additive (B2) represented by Formula (b2) set forth later, and the phenol-based additive (B3) represented by Formula (b3) set forth later, and the content of the phenol-based additive (B) in the poly-1-butene resin composition of the present invention is equal to the total content of the phenol-based additive (B1), the phenol-based additive (B2) and the phenol-based additive (B3).

In the poly-1-butene resin composition of the present invention, the content of the phenol-based additive (B), namely the total content of the phenol-based additive (B1), the phenol-based additive (B2) and the phenol-based additive (B3), is generally 0.6 to 1.2 parts by weight, preferably 0.8 to 1.0 part by weight, with respect to 100 parts by weight of the poly-1-butene resin. Using the phenol-based additive (B) in the above-described range is preferred in terms of being able to prevent the discoloration of molded articles such as pipes.

The phenol-based additive (B) used in the present invention may be any one of (B1), (B2) and (B3), or alternatively a combination of two or more selected therefrom. When two or more thereof are used, general combinations are (B1) and (B2); (B2) and (B3); (B1) and (B3); as well as (B1), (B2) and (B3). The most preferred combinations are (B1) and (B2); as well as (B1), (B2) and (B3). When (B1) is combined with (B2) and/or (B3), (B1) generally accounts for 0 to 70%, preferably 10 to 65%, and more preferably 20 to 55%, with respect to the phenol-based additive (B). At these ranges, resistance to chlorine water is good in the bent portion, too, and molding stability and heat resistance are excellent.

[Phenol-based additive (B1)]

The phenol-based additive (B1) used in the present invention is represented by Formula (b1).

[Chem. 2]

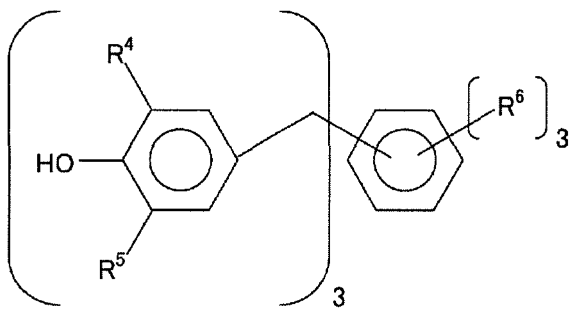

· · · · · (b 1)

In Formula (b1), $R^4$, $R^5$ and $R^6$ are each independently an alkyl group having 1 to 4 carbon atoms.

Specific examples of the alkyl group having 1 to 4 carbon atoms as $R^4$, $R^5$ and $R^6$ in Formula (b1) include methyl group, ethyl group, n-propyl group, isopropyl group, n-butyl group, isobutyl group, s-butyl group and t-butyl group.

A specific example of the phenol-based additive (B1) described above is 1,3,5-trimethyl-2,4,6-tris(3,5-di-t-butyl-4-hydroxybenzyl)benzene.

The phenol-based additive (B1) described above may be used singly, or may be a combination of two or more kinds. The phenol-based additive (B1) is used, with respect to 100 parts by weight of the poly-1-butene resin, in an amount of 0.2 to 1.0 part by weight, preferably 0.2 to 0.6 part by weight, and more preferably 0.2 to 0.5 part by weight.

[Phenol-based additive (B2)]

The phenol-based additive (B2) used in the present invention is represented by Formula (b2).

[Chem. 3]

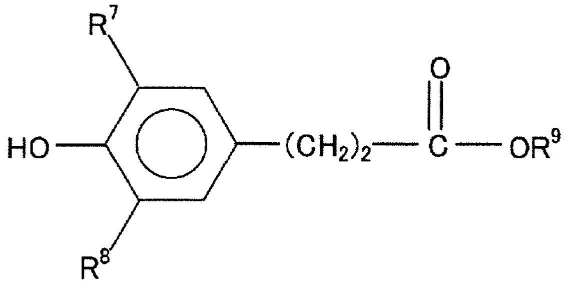

· · · · · (b 2)

In Formula (b2), $R^7$ and $R^8$ are each independently an alkyl group having 1 to 4 carbon atoms; and $R^9$ is an alkyl group having 10 to 20 carbon atoms.

Examples of the alkyl group having 1 to 4 carbon atoms as $R^7$ and $R^8$ in Formula (b2) include methyl group, ethyl group, n-propyl group, isopropyl group, n-butyl group, isobutyl group, s-butyl group and t-butyl group.

Specific examples of the alkyl group having 10 to 20 carbon atoms as $R^9$ in Formula (b2) include decyl group, undecyl group, dodecyl group, tridecyl group, tetradecyl group, pentadecyl group, hexadecyl group, heptadecyl group, octadecyl group, nonadecyl group and eicosyl group.

Specific examples of the phenol-based additive (B2) represented by Formula (b2) include decyl-3-(3,5-dimethyl-4-hydroxyphenyl)propionate, undecyl-3-(3,5-dimethyl-4-hydroxyphenyl)propionate, dodecyl-3-(3,5-dimethyl-4-hydroxyphenyl)propionate, tridecyl-3-(3,5-dimethyl-4-hydroxyphenyl)propionate, tetradecyl-3-(3,5-dimethyl-4-hydroxyphenyl)propionate, pentadecyl-3-(3,5-dimethyl-4-hydroxyphenyl)propionate, hexadecyl-3-(3,5-dimethyl-4-hydroxyphenyl)propionate, heptadecyl-3-(3,5-dimethyl-4-hydroxyphenyl)propionate, octadecyl-3-(3,5-dimethyl-4-hydroxyphenyl)propionate, eicosyl-3-(3,5-dimethyl-4-hydroxyphenyl)propionate, decyl-3-(3,5-diethyl-4-hydroxyphenyl)propionate, undecyl-3-(3,5-diethyl-4-hydroxyphenyl)propionate, dodecyl-3-(3,5-diethyl-4-hydroxyphenyl)propionate, tridecyl-3-(3,5-diethyl-4-hydroxyphenyl)propionate, tetradecyl-3-(3,5-diethyl-4-hydroxyphenyl)propionate, pentadecyl-3-(3,5-diethyl-4-hydroxyphenyl)propionate, hexadecyl-3-(3,5-diethyl-4-hydroxyphenyl)propionate, heptadecyl-3-(3,5-diethyl-4-hydroxyphenyl)propionate, octadecyl-3-(3,5-diethyl-4-hydroxyphenyl)propionate, eicosyl-3-(3,5-diethyl-4-hydroxyphenyl)propionate, decyl-3-(3-methyl-5-ethyl-4-hydroxyphenyl)propionate, undecyl-3-(3-methyl-5-ethyl-4-hydroxyphenyl)propionate, dodecyl-3-(3-methyl-5-ethyl-4-hydroxyphenyl)propionate, tridecyl-3-(3-methyl-5-ethyl-4-hydroxyphenyl)propionate, tetradecyl-3-(3-methyl-5-ethyl-4-hydroxyphenyl)propionate, pentadecyl-3-(3-methyl-5-ethyl-4-hydroxyphenyl)propionate, hexadecyl-3-(3-methyl-5-ethyl-4-hydroxyphenyl)propionate, heptadecyl-3-(3-methyl-5-ethyl-4-hydroxyphenyl)propionate, octadecyl-3-(3-methyl-5-ethyl-4-hydroxyphenyl)propionate, eicosyl-3-(3-methyl-5-ethyl-4-hydroxyphenyl)propionate, decyl-3-(3,5-diisopropyl-4-hydroxyphenyl)propionate, undecyl-3-(3,5-diisopropyl-4-hydroxyphenyl)propionate, dodecyl-3-(3,5-diisopropyl-4-hydroxyphenyl)propionate, tridecyl-3-(3,5-diisopropyl-4-hydroxyphenyl)propionate, tetradecyl-3-(3,5-diisopropyl-4-hydroxyphenyl)propionate, pentadecyl-3-(3,5-diisopropyl-4-hydroxyphenyl)propionate, hexadecyl-3-(3,5-diisopropyl-4-hydroxyphenyl)propionate, heptadecyl-3-(3,5-diisopropyl-4-hydroxyphenyl)propionate, octadecyl-3-(3,5-diisopropyl-4-hydroxyphenyl)propionate, eicosyl-3-(3,5-diisopropyl-4-hydroxyphenyl)propionate, decyl-3-(3,5-di-t-butyl-4-hydroxyphenyl)propionate, undecyl-3-(3,5-di-t-butyl-4-hydroxyphenyl)propionate, dodecyl-3-(3,5-di-t-butyl-4-hydroxyphenyl)propionate, tridecyl-3-(3,5-di-t-butyl-4-hydroxyphenyl)propionate, tetradecyl-3-(3,5-di-t-butyl-4-hydroxyphenyl)propionate, pentadecyl-3-(3,5-di-t-butyl-4-hydroxyphenyl)propionate, hexadecyl-3-(3,5-di-t-butyl-4-hydroxyphenyl)propionate, heptadecyl-3-(3,5-di-t-butyl-4-hydroxyphenyl)propionate, octadecyl-3-(3,5-di-t-butyl-4-hydroxyphenyl)propionate, eicosyl-3-(3,5-di-t-butyl-4-hydroxyphenyl)propionate, decyl-3-(3-methyl-5-t-butyl-4-hydroxyphenyl)propionate, undecyl-3-(3-methyl-5-t-butyl-4-hydroxyphenyl)propionate, dodecyl-3-(3-methyl-5-t-butyl-4-hydroxyphenyl)propionate, tridecyl-3-(3-methyl-5-t-butyl-4-hydroxyphenyl)propionate, tetradecyl-3-(3-methyl-5-t-butyl-4-hydroxyphenyl)propionate, pentadecyl-3-(3-methyl-5-t-butyl-4-hydroxyphenyl)propionate, hexadecyl-3-(3-methyl-5-t-butyl-4-hydroxyphenyl)propionate, heptadecyl-3-(3-methyl-5-t-butyl-4-hydroxyphenyl)propionate, octadecyl-3-(3-methyl-5-t-butyl-4-hydroxyphenyl)propionate, eicosyl-3-(3-methyl-5-t-butyl-4-hydroxyphenyl)propionate, decyl-3-(3-ethyl-5-t-butyl-4-hydroxyphenyl)propionate, undecyl-3-(3-ethyl-5-t-butyl-4-hydroxyphenyl)propionate, dodecyl-3-(3-ethyl-5-t-butyl-4-hydroxyphenyl)propionate, tridecyl-3-(3-ethyl-5-t-butyl-4-hydroxyphenyl)propionate, tetradecyl-3-(3-ethyl-5-t-butyl-4-hydroxyphenyl)propionate, pentadecyl-3-(3-ethyl-5-t-butyl-4-hydroxyphenyl)propionate, hexadecyl-3-(3-ethyl-5-t-butyl-4-hydroxyphenyl)propionate, heptadecyl-3-(3-ethyl-5-t-butyl-4-hydroxyphenyl)propionate, octadecyl-3-(3-ethyl-5-t-butyl-4-hydroxyphenyl)propionate, eicosyl-3-(3-ethyl-5-t-butyl-4-hydroxyphenyl)propionate, decyl-3-(3-isopropyl-5-t-butyl-4-hydroxyphenyl)propionate, undecyl-3-(3-isopropyl-5-t-butyl-4-hydroxyphenyl)propionate, dodecyl-3-(3-isopropyl-5-t-butyl-4-hydroxyphenyl)propionate, tridecyl-3-(3-isopropyl-5-t-butyl-4-hydroxyphenyl)propionate, tetradecyl-3-(3-isopropyl-5-t-butyl-4-hydroxyphenyl)propionate, pentadecyl-3-(3-isopropyl-5-t-butyl-4-hydroxyphenyl)propionate, hexadecyl-3-(3-isopropyl-5-t-butyl-4-hydroxyphenyl)propionate, heptadecyl-3-(3-isopropyl-5-t-butyl-4-hydroxyphenyl)propionate, octadecyl-3-(3-isopropyl-5-t-butyl-4-hydroxyphenyl)propionate, and eicosyl-3-(3-isopropyl-5-t-butyl-4-hydroxyphenyl)propionate. Among these, preferred is octadecyl-3-(3,5-di-t-butyl-4-hydroxyphenyl)propionate.

The phenol-based additive (B2) described above may be used singly, or may be a combination of two or more kinds. The phenol-based additive (B2) is used, with respect to 100 parts by weight of the poly-1-butene resin, in an amount of 0.2 to 1.0 part by weight, preferably 0.2 to 0.6 part by weight, and more preferably 0.2 to 0.5 part by weight.

[Phenol-based additive (B3)]

The phenol-based additive (B3) used in the present invention is represented by Formula (b3).

[Chem. 4]

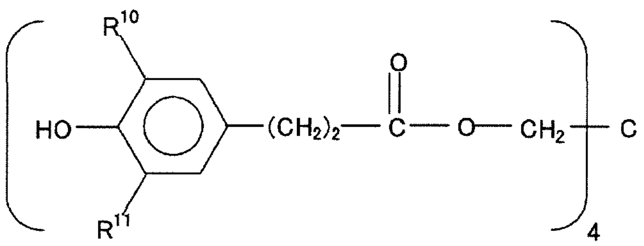

..... (b 3)

In Formula (b3), $R^{10}$ and $R^{11}$ are each independently an alkyl group having 1 to 4 carbon atoms.

Specific examples of the alkyl group having 1 to 4 carbon atoms as $R^{10}$ and $R^{11}$ in Formula (b3) include methyl group, ethyl group, n-propyl group, isopropyl group, n-butyl group, isobutyl group, s-butyl group and t-butyl group.

Specific examples of the phenol-based additive (B3) represented by Formula (b3) include tetrakis[methylene-3-(3,5-dimethyl-4-hydroxyphenyl)propionate]methane, tetrakis[methylene-3-(3,5-diethyl-4-hydroxyphenyl)propionate]methane, tetrakis[methylene-3-(3-methyl-5-ethyl-4-hydroxyphenyl)propionate]methane, tetrakis[methylene-3-(3,5-diisopropyl-4-hydroxyphenyl)propionate]methane, tetrakis[methylene-3-(3-methyl-5-isopropyl -4-hydroxyphenyl)propionate]methane, tetrakis[methylene-3-(3-ethyl-5-isopropyl-4-hydroxyphenyl)propionate]methane, tetrakis[methylene-3-(3,5-di-t-butyl-4-hydroxyphenyl)propionate]methane, tetrakis[methylene-3-(3-methyl-5-t-butyl-4-hydroxyphenyl)propionate]methane, tetrakis[methylene-3-(3-ethyl-5-t-butyl-4-hydroxyphenyl)propionate]methane, and tetrakis[methylene-3-(3-isopropyl-5-t-butyl-4-hydroxyphenyl)propionate]methane. Among these, preferred is tetrakis[methylene-3-(3,5-di-t-butyl-4-hydroxyphenyl)propionate]methane.

The phenol-based additive (B3) described above may be used singly, or may be a combination of two or more kinds. The phenol-based additive (B3) is used, with respect to 100 parts by weight of the poly-1-butene resin, in an amount of 0.2 to 1.0 part by weight, preferably 0.2 to 0.6 part by weight, and more preferably 0.2 to 0.5 part by weight.

[Other components including stabilizers]

The poly-1-butene resin composition of the present invention, containing the benzoate-based additive (A) and the phenol-based additive (B), may further contain a sulfur-based stabilizer and/or a phosphorus-based stabilizer, e.g., in order to have improved stability at the time of mold-processing.

If the sulfur-based stabilizer and/or the phosphorus-based stabilizer are contained in the poly-1-butene resin composition of the present invention, e.g., in order to have improved stability at the time of mold-processing, its preferred amount is 0.01 to 1.0 part by weight with respect to 100 parts by weight of the poly-1-butene resin.

To increase the solidifying speed of a molten resin at the time of mold-processing, the poly-1-butene resin composition of the present invention may contain a known nucleating agent such as a carboxylic acid amide compound. If a known nucleating agent such as a carboxylic acid amide compound is contained in the poly-1-butene resin composition of the present invention to increase the solidifying speed of a molten resin at the time of mold-processing, its preferred amount is 0.001 to 5 parts by weight with respect to 100 parts by weight of the poly-1-butene resin.

The poly-1-butene resin composition of the present invention may further contain a stabilizer other than the sulfur-based additive and/or the phosphorus-based stabilizer, a fungicide, a rust preventive, a lubricant, a filler, a pigment, a dye and the like in a range not detrimental to the effects of the present invention.

For blending various additives in the poly-1-butene resin composition of the present invention, the poly-1-butene

resin and various additives are mixed with each other at a predetermined proportion, and then are melt-kneaded by the use of a device such as a mono-axial extruder, a biaxial extruder, a biaxial kneader and a Banbury mixer.

[Water or hot water supply pipe]

The poly-1-butene resin composition of the present invention, which can be molded into various kinds of articles, is suitable particularly for the water or hot water supply pipe.

The water or hot water supply pipe comprising the poly-1-butene resin composition of the present invention is not particularly limited in its shape, examples of its cross-section shape including a circle, a polygon and any other shapes. The pipe generally has an inner diameter of 3 to 1400 mm, an outer diameter of 5 to 1600 mm, and a thickness of 1 to 100 mm. The water or hot water supply pipe according to the present invention is obtainable by extrusion molding method conventionally known.

The water or hot water supply pipe comprising the poly-1-butene resin composition of the present invention has flexibility and can have a bent portion. The water or hot water supply pipe according to the present invention, when having a bent portion, may have the bent portion with a bend radius (minimum bend radius) which is not more than 50 times as large as a diameter of the pipe. The bent portion in the water or hot water supply pipe according to the present invention may be formed by any known method at the time the pipe is produced, stored or installed: the pipe may be bent as it is at ordinary temperature, or may be subjected to thermal bend-processing. The water or hot water supply pipe according to the present invention, which can be installed by conventionally known piping method, is highly suitable in sheath piping method, in particular.

The water or hot water supply pipe comprising the poly-1-butene resin composition of the present invention may be inserted in a protecting tube or in a sheath tube to form a double-pipe structure. A material of the protecting tube or the sheath tube is not particularly limited, and may be a protecting tube or sheath tube conventionally known. The piping method for forming the double-pipe structure according to the present invention, which is not particularly limited, may be such that the double-pipe structure previously formed is installed, or that the double-pipe structure may be formed on the site by sheath piping method.

The pipe obtained by using the resin of the present invention is used for a water or hot water supply system. For instance when a pipe is laid to draw hot water indoors from a heating device set outdoors, the pipe has curving parts; by using a pipe material using the composition of the present invention, there is no need for joints in some cases. Employing such suitable property to curving parts in this way facilitates the application to pipes for a radiator or for a heat exchange system as well as to a floor heating system, wherein there are cases joints are not required even when curving parts exist.

Embodiments set forth below are also preferred embodiments of the present invention.

(i) a water or hot water supply pipe obtained from the poly-1-butene resin composition of the present invention.
(ii) The water or hot water supply pipe described in the above (i), which has a bent portion.
(iii) The water or hot water supply pipe described in the above (i) or (ii), which has a bent portion, the pipe having a bend radius (minimum bend radius) not more than 50 times as large as an outer diameter of the pipe.
(iv) A water or hot water supply pipe having a double-pipe structure for water or hot water supply, wherein the water or hot water supply pipe described in any one of the above (i) to (iii) is inserted in a protecting tube or a sheath tube that is flexible and made of a synthetic resin.
(v) A hot water supply system using the water or hot water supply pipe described in any of the above (i) to (iv).
(vi) A radiator using the water or hot water supply pipe described in any of the above (i) to (iv).
(vii) A heat exchange system using the water or hot water supply pipe described in any of the above (i) to (iv).
(viii) A floor heating system using the water or hot water supply pipe described in any of the above (i) to (iv).

Examples

Hereinafter, the present invention will be described with reference to Example, but is in no way limited by Examples provided below.

[Example 1]

To 100 parts by weight of a poly-1-butene having MFR (190°C, 2.16 kg load) = 0.5 g/10 min, Mw/Mn = 8 and mmmm%= 93%, there were added 0.07 part by weight of ethylene bis stearamide; 0.3 part by weight of 2,4-di-t-butylphenyl-3,5-di-t-butyl-4-hydroxybenzoate (Tinuvin120, manufactured by BASF) as the benzoate-based additive (A); 0.5 part by weight of 1,3,5-trimethyl-2,4,6-tris(3,5-di-t-butyl-4-hydroxybenzyl)benzene(Irganox1330, manufactured by BASF) as the phenol-based additive (B1); 0.3 part by weight of octadecyl-3-(3,5-di-t-butyl-4-hydroxyphenyl)propionate

(Irganox1010, manufactured by BASF) as the phenol-based additive (B2); 0.2 part by weight of tetrakis[methylene-3-(3,5-di-t-butyl-4-hydroxyphenyl)propionate]methane (Irganox1076, manufactured by BASF) as the phenol-based additive (B3). They were melt-blended by the use of a 40 mm mono-axial extruder. A poly-1-butene resin composition in the form of a pellet was obtained.

Then, the poly-1-butene resin composition was press-molded at 190°C for 5 minutes to give a press sheet with a thickness of 2 mm.

[Environmental stress cracking test]

From the press sheet obtained, a strip-shaped sample was cut out in accordance with ASTM D1693. The sample was attached to a holder conforming to ASTM D1693 (made of polyphenylene sulfide resin), while being bent in accordance with that standard. The holder itself where the sample was held was soaked in a glass container filled with chlorine water at 90°C having a chlorine concentration of 100 ppm. One liter of chlorine water per 1 hour was continuously replaced so that the chlorine concentration was kept constant.

For a sample with no bend loaded in the chlorine water, a period of time (week) consumed till the sample had whitening is indicated in "no bend in chlorine water" section of Table 1. For a sample with bend loaded in the chlorine water, the surface of the sample pipe was observed at a magnification of 50 times and a period of time (week) till the sample had cracking is indicated in "bend test in chlorine water" section of Table 1.

[Discoloration test]

The degree of yellowing of the pellet that had been kept for a certain period of time (temperature: 40°C, humidity: 50%, time: 4380 hours) was visually observed. A pellet having no yellowing was labeled as "○", and a pellet having yellowing was labeled as "×", in "Yellowing" section of Table 1.

[Correlation between press sheet and pipe in bending]

Previously determining a distortion occurring when a press sheet is bent and a distortion occurring when a pipe is bent makes it possible to convert a bend loaded to the press sheet in the present specification to a bend radius of the pipe.

The distortion occurring when the press sheet is bent can be calculated by using an equation below.

$$\text{Distortion} = t/(w-t)$$

wherein t is a thickness (mm) and w is an inner width (mm) of a holder used in bent slip test.

On the other hand, the relation between a radius of the pipe and a distortion occurring when the pipe was bent was determined by finite element analysis.

Through the above, the press sheet was found to have a distortion of 20% occurring in the bent slip test. This corresponds to a pipe with an outer diameter of 13 mm having a bend radius of 28 mm, wherein a ratio of the bend radius to the pipe outer diameter is 2.2.

[Examples 2 to 4 and Comparative Examples 1 to 6]

Examples 1 was repeated except that the benzoate-based additive (A), the phenol-based additive (B1), the phenol-based additive (B2) and the phenol-based additive (B3) were added each in an amount indicated in Table 1, so that a pellet and a sample were obtained, which were respectively subjected to discoloration test and environmental stress cracking test.

[Table 1]

Table 1

| | Benzoate-based additive (A) | Phenol-based additive (B) | | | Weight ratio (A) : (B) | No bend in chlorine water | Bend test in chlorine water | Yellowing |
|---|---|---|---|---|---|---|---|---|
| | | (B1) | (B2) | (B3) | | | | |
| (unit) | part by weight | part by weight | part by weight | part by weight | - | week | week | |
| Example 1 | 0.3 | 0.5 | 0.3 | 0.2 | 1: 3.33 | 25 | 7 | ○ |
| Example 2 | 0.3 | 0.4 | 0.2 | 0.2 | 1: 2.67 | 22 | 5 | ○ |
| Example 3 | 0.2 | 0.5 | 0.3 | 0.2 | 1: 5 | 21 | 6 | ○ |
| Example 4 | 0.5 | 0.4 | 0.2 | 0.2 | 1: 1.6 | 26 | 5 | ○ |
| Example 5 | 0.3 | 0.8 | 0 | 0 | 1: 2.67 | 22 | 5 | ○ |
| Example 6 | 0.3 | 0 | 0.8 | 0 | 1: 2.67 | 20 | 5 | ○ |
| Example 7 | 0.3 | 0 | 0 | 0.8 | 1: 2.67 | 20 | 5 | ○ |
| Example 8 | 0.3 | 0.5 | 0.3 | 0 | 1: 2.67 | 22 | 5 | ○ |
| Comp. Ex. 1 | 0 | 0 | 0 | 0 | | 2 | 1 | ○ |
| Comp. Ex. 2 | 0.3 | 0 | 0 | 0 | | 14 | 2 | ○ |
| Comp. Ex. 3 | 1 | 0 | 0 | 0 | | 16 | 2 | ○ |
| Comp. Ex. 4 | 0.15 | 0.4 | 0.2 | 0.2 | 1: 5.33 | 19 | 4 | ○ |
| Comp. Ex. 5 | 0.2 | 0.2 | 0 | 0 | 1: 1 | 15 | 2 | ○ |
| Comp. Ex. 6 | 0 | 0.8 | 0.4 | 0.4 | | 18 | 5 | × |

As is clear from the above Examples, the composition of the present invention is successful in considerably lengthening the period of time consumed till the whitening is observed not only in the samples with no bend loaded but also in the bent portions of the samples.

Industrial Applicability

The poly-1-butene resin composition of the present invention, as compared with conventional poly-1-butene resin pipes, is capable of producing a pipe superior in stress crack resistance in chlorine-containing aqueous environment. The pipe produced from the poly-1-butene resin composition of the present invention provides an advantageous effect of its portions on which stress is loaded (for example, bent portions of the pipe) being inhibited from having cracks attributable to chlorine-containing water, thus being suitable as a water or hot water supply pipe. The water or hot water supply pipe comprising the poly-1-butene resin composition of the present invention, which is employable in any piping method, is highly suitable particularly in sheath piping method, by which the pipe is provided with portions on which stress is loaded (for example, the bent portions of the pipe).

## Claims

1. A poly-1-butene resin composition comprising a poly-1-butene resin, a benzoate-based additive (A) represented by Formula (a) and a phenol-based additive (B), the phenol-based additive (B) being at least one phenol-based additive selected from a phenol-based additive (B1) represented by Formula (b1), a phenol-based additive (B2) represented by Formula (b2) and a phenol-based additive (B3) represented by Formula (b3), wherein the phenol-based additive (B1), if present, accounts for 0.2 to 1.0 part by weight with respect to 100 parts by weight of the poly-1-butene resin; the phenol-based additive (B2), if present, accounts for 0.2 to 1.0 part by weight with respect to 100 parts by weight of the poly-1-butene resin; and the phenol-based additive (B3), if present, accounts for 0.2 to 1.0 part by weight with respect to 100 parts by weight of the poly-1-butene resin, and wherein in the poly-1-butene resin composition, a weight ratio of the benzoate-based additive (A) to the phenol-based additive (B) is the benzoate-based additive (A): the phenol-based additive (B) = 1:1.5 to 1:5,

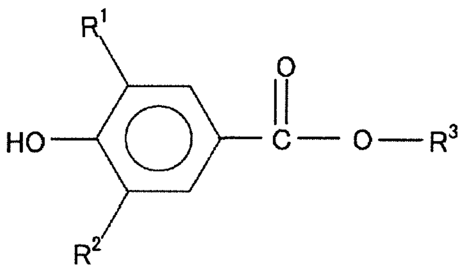

. . . . . . (a)

wherein in Formula (a), $R^1$ and $R^2$ are each independently an alkyl group having 1 to 4 carbon atoms; $R^3$ is an alkyl group having 1 to 18 carbon atoms or an aryl group having 6 to 18 carbon atoms, and the aryl group may be substituted with an alkyl group,

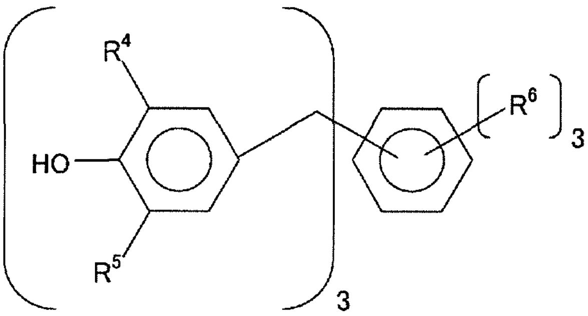

. . . . . . (b 1)

wherein in Formula (b1), $R^4$, $R^5$ and $R^6$ are each independently an alkyl group having 1 to 4 carbon atoms,

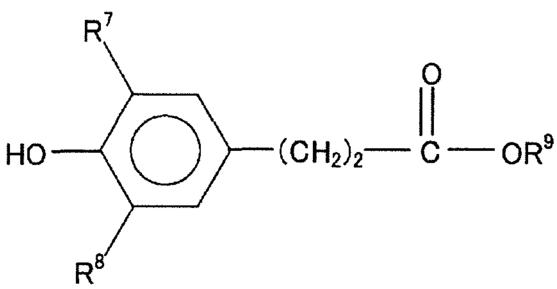

. . . . . . (b 2)

wherein in Formula (b2), $R^7$ and $R^8$ are each independently an alkyl group having 1 to 4 carbon atoms; and $R^9$ is

an alkyl group having 10 to 20 carbon atoms,

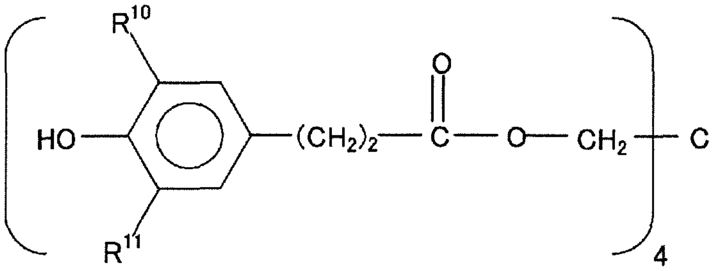 ..... (b 3)

wherein in Formula (b3), $R^{10}$ and $R^{11}$ are each independently an alkyl group having 1 to 4 carbon atoms.

2. The poly-1-butene resin composition according to claim 1, wherein the phenol-based additive (B) comprises the phenol-based additive (B1), the phenol-based additive (B2) and the phenol-based additive (B3) each in an amount of 0.2 to 1.0 part by weight with respect to 100 parts by weight of the poly-1-butene resin; and a weight ratio of the benzoate-based additive (A) to the phenol-based additive (B) is the benzoate-based additive (A): the phenol-based additive (B) = 1:1.5 to 1:5.

3. The poly-1-butene resin composition according to claim 1, wherein $R^3$ in Formula (a) is represented by the following formula wherein $R^{12}$ is an alkyl group having 1 to 4 carbon atoms.

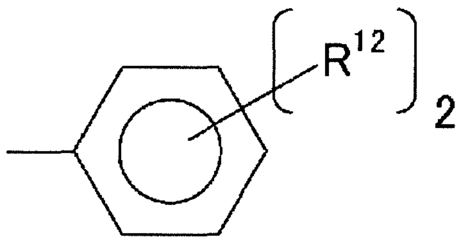

4. The poly-1-butene resin composition according to claim 1, wherein the benzoate-based compound (A) is 2,4-di-t-butylphenyl-3,5-di-t-butyl-4-hydroxybenzoate.

5. The poly-1-butene resin composition according to any one of claims 1 to 4, wherein the phenol-based additive (B1) is 1,3,5-trimethyl-2,4,6-tris(3,5-di-t-butyl-4-hydroxybenzyl)benzene; the phenol-based additive (B2) is octadecyl-3-(3,5-di-t-butyl-4-hydroxyphenyl)propionate; and the phenol-based additive (B3) is tetrakis[methylene-3-(3,5-di-t-butyl-4-hydroxyphenyl)propionate]methane.

6. The poly-1-butene resin composition according to any one of claims 1 to 5, wherein the phenol-based additive (B1), the phenol-based additive (B2) and the phenol-based additive (B3) total 0.8 to 1.0 part by weight with respect to 100 parts by weight of the poly-1-butene resin.

7. The poly-1-butene resin composition according to any one of claims 1 to 6, which comprises a sulfur-based stabilizer and/or a phosphorus-based stabilizer at 0.01 to 1.0 part by weight with respect to 100 parts by weight of the poly-1-butene resin.

8. A water or hot water supply pipe comprising the poly-1-butene resin composition according to any one of claims 1 to 7.

9. The water or hot water supply pipe according to claim 8, which has a bent portion.

10. The water or hot water supply pipe according to claim 8 or 9, which has a bent portion and which has a bend radius (minimum bend radius) not more than 50 times as large as an outer diameter of the pipe.

11. A water or hot water supply pipe having a double-pipe structure for water or hot water supply, wherein the water or

hot water supply pipe according to any one of claims 8 to 10 is inserted in a protecting tube or a sheath tube that is flexible and made of a synthetic resin.

**12.** A hot water supply system using the water or hot water supply pipe according to any one of claims 8 to 11.

**13.** A radiator using the water or hot water supply pipe according to any one of claims 8 to 11.

**14.** A heat exchange system using the water or hot water supply pipe according to any one of claims 8 to 11.

**15.** A floor heating system using the water or hot water supply pipe according to any one of claims 8 to 11.

## INTERNATIONAL SEARCH REPORT

International application No. PCT/JP2014/059885

A. CLASSIFICATION OF SUBJECT MATTER
*C08L23/20*(2006.01)i, *C08K5/05*(2006.01)i, *C08K5/101*(2006.01)i

According to International Patent Classification (IPC) or to both national classification and IPC

B. FIELDS SEARCHED

Minimum documentation searched (classification system followed by classification symbols)
C08L23/20, C08K5/05, C08K5/101

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2014 |
| Kokai Jitsuyo Shinan Koho | 1971-2014 | Toroku Jitsuyo Shinan Koho | 1994-2014 |

Electronic data base consulted during the international search (name of data base and, where practicable, search terms used)
CAplus/REGISTRY(STN)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2-238036 A (Sumitomo Metal Industries, Ltd.),<br>20 September 1990 (20.09.1990),<br>claims; examples<br>(Family: none) | 1-8<br>9-15 |
| Y<br>A | JP 1-283492 A (NKK Corp.),<br>15 November 1989 (15.11.1989),<br>claims; examples<br>(Family: none) | 9-15<br>1-8 |
| Y<br>A | JP 2011-247558 A (Mitsubishi Plastics, Inc.),<br>08 December 2011 (08.12.2011),<br>claims; examples<br>(Family: none) | 9-15<br>1-8 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>10 June, 2014 (10.06.14) | Date of mailing of the international search report<br>17 June, 2014 (17.06.14) |
| Name and mailing address of the ISA/<br>Japanese Patent Office<br>Facsimile No. | Authorized officer<br><br>Telephone No. |

Form PCT/ISA/210 (second sheet) (July 2009)

**INTERNATIONAL SEARCH REPORT**

International application No. PCT/JP2014/059885

C (Continuation). DOCUMENTS CONSIDERED TO BE RELEVANT

| Category* | Citation of document, with indication, where appropriate, of the relevant passages | Relevant to claim No. |
|---|---|---|
| Y<br>A | JP 2-255746 A (Idemitsu Petrochemical Co., Ltd.),<br>16 October 1990 (16.10.1990),<br>claims; examples<br>(Family: none) | 9-15<br>1-8 |
| A | JP 10-128907 A (Kawasaki Steel Corp.),<br>19 May 1998 (19.05.1998),<br>entire text<br>& US 6057017 A & EP 882571 A1<br>& WO 1998/018619 A1 & DE 69735051 D<br>& DE 69735051 T & AU 4724497 A<br>& CA 2240127 A & AU 725782 B | 1-15 |
| A | JP 9-324081 A (The Furukawa Electric Co., Ltd.),<br>16 December 1997 (16.12.1997),<br>entire text<br>(Family: none) | 1-15 |
| A | EP 0124664 A1 (MITSUI PETROCHEMICAL INDUSTRIES, LTD.),<br>14 November 1984 (14.11.1984),<br>entire text<br>& DE 3374849 D | 1-15 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP S58084839 A
- JP S63213542 A
- JP S63213543 A
- JP S63213544 A
- WO 0202659 A